Europäisches Patentamt

European Patent Office

Office européen des brevets

(19)

(11) Veröffentlichungsnummer: **0 140 160**
**B1**

# (12) EUROPÄISCHE PATENTSCHRIFT

(45) Veröffentlichungstag der Patentschrift:
15.07.87

(21) Anmeldenummer: 84111479.6

(22) Anmeldetag: 26.09.84

(51) Int. Cl.⁴: **H 02 P 8/00**, B 41 J 1/00

(54) Lastwinkelabhängige Schrittaktregelung für Schrittmotore.

(30) Priorität: 29.09.83 DE 3335382

(43) Veröffentlichungstag der Anmeldung:
08.05.85 Patentblatt 85/19

(45) Bekanntmachung des Hinweises auf die Patenterteilung:
15.07.87 Patentblatt 87/29

(84) Benannte Vertragsstaaten:
BE CH DE FR GB IT LI NL SE

(56) Entgegenhaltungen:
EP - A - 0 054 826
DE - A - 3 138 554
DE - A - 3 305 306
US - A - 3 842 371
US - A - 4 072 888
US - A - 4 333 045

ELEKTRONIK, 1980, Heft 23, 13. November 1980,
München, H. SAX "Schrittmotoransteuerung mit
monolithischen Bausteinen", Seiten 67-71

(73) Patentinhaber: **Siemens Aktiengesellschaft Berlin und
München, Wittelsbacherplatz 2, D-8000 München 2 (DE)**

(72) Erfinder: **Treffer, Gerhard, Dipl.-Ing., Eichenstrasse 2,
D-8028 Taufkirchen (DE)**
Erfinder: **Frystacki, Henryk, Dipl.-Ing., Mozartstrasse 9,
D-8033 Krailling (DE)**

## Beschreibung

Die Erfindung betrifft ein Verfahren zur Schrittaktregelung eines Schrittmotors gemäss dem Oberbegriff der Patentansprüche 1 und 8, und eine Schaltungsanordnung zur Durchführung des Verfahrens.

Elektrische Motore, und insbesondere Schrittmotore, sind physikalisch gesehen Umformer, die eine elektrische Eingangsgrösse in eine mechanische Ausgangsgrösse umwandeln. Der Schrittmotor besitzt entsprechend seiner Konstruktion eine Antriebswelle oder einen Rotor, der pro Eingangsspannungsimpuls um einen genau definierten Winkel schrittweise verdreht wird. Dieser Winkel wird i.a. als Schrittwinkel bezeichnet, und ist durch den konstruktiven Aufbau des Schrittmotors festgelegt. Bei einem Schrittmotor handelt es sich also um ein diskretes Stellglied, das quantisierte Drehbewegungen ausführen kann.

Bei einer entsprechend hohen Folgefrqeuenz der Eingangsspannungsimpulse geht diese schrittweise Drehbewegung in einen kontinuierlichen Synchronlauf über. Eine Einführung und Übersicht über gebräuchlies Schrittmotoren ist in der Zeitschrift «Elektronik», Jan. 1967, Heft 1, Seite 1 bis 6 und Heft 2, Seite 53 bis 57, sowie in dem Aufsatz «Schrittmotoren-Aufbau, Funktionsweise und Anwendung» der Fa. Gerhard Berger GmbH + Co. in Lahr veröfffentlicht.

Die Erfindung bezieht sich insbesondere auf einen zweiphasigen Schrittmotor mit permanentmagnetischer Erregung. Dieser Schrittmotor besitzt als Rotor einen gezahnten Permanentmagnetanker. Sein Stator besteht aus zwei Statorsystemen, entsprechend den beiden verwendeten Phasen. Jedes der beiden Statorsysteme besteht aus einem Stator-Kranz mit Zähnen bzw. Polen. Die beiden Statorsysteme sind derart angeordnet, dass bei einer Abwicklung der Stator-Kränze die Zähne des einen den Zwischenräumen des anderen gegenüberstehen.

Jedem Statorsystem ist ein magnetisierendes Wicklungssystem zugeordnet, aufgrund dessen die zugehörigen Zähne eine abwechselnde Folge von Nord- und Südpolen bilden.

Das prinzipielle Ansteuerverfahren, sowie verschiedene Bauformen und verschiedene Ansteuerverfahren, um einen solchen Schrittmotor in eine Drehbewegung zu versetzen, sind in dem oben erwähnten Aufsatz der Fa. Berger auf Seite 3 beschrieben.

Bei der Drehbewegung des Schrittmotors werden beispielsweise die Wicklungen der beiden Statorsysteme von Strömen wechselnder Polarität durchflossen, deren Polaritätswechsel um 90° phasenversetzt sind. Diese Art der Ansteuerung wird als bipolare Zweistrangansteuerung bezeichnet. Der Wechsel der Polarisierung der Pole eines Statorsystems bewirkt das Weiterdrehen des Rotors des Schrittmotors um einen Schritt. Der sequentielle Wechsel der Polarisierung, der abwechselnd in beiden Statorsystemen erfolgt, bewirkt die kontinuierliche Drehbewegung des Rotors.

Durch die Phasenversetzung in positiver oder negativer Richtung ist die Richtung der Drehbewegung des Schrittmotors festgelegt.

Ein Schrittmotor besitzt aber keine mechanisch wirkenden Raststellungen, sondern elektromagnetische. Eine solche Raststellung ist geometrisch beispielsweise dadurch gekennzeichnet, dass aufgrund einer entsprechenden Magnetisierung ein Nordpol des Rotors (d.h. der Zahn oder Pol, der ein permanentmagnetischer Nordpol ist) sich zwischen zwei Südpolen der Statorsysteme befindet, wobei jedes Statorsystem einen Südpol beisteuert. Für die andere Polarität gilt das Analoge. Durch die Überlagerung der magnetischen Kräfte der beiden Statorsysteme, die charakteristisch für die oben genannte bipolare Zweistangenansteuerung ist, wird der Rotor des Schrittmotors in einer stabilen Lage gehalten.

Bei der Drehbewegung des Schrittmotors ist durch die Anzahl (pro Sekunde) der durchlaufenden Raststellungen der Wert der Frequenz (d.h. der Impulsfolgefrequenz) des Schrittaktes bestimmt. Der Wert der Frequenz des Schrittaktes ist viermal so gross wie der Wert der Frequenz des Wechselstromes durch die Wicklung eines der Statorsysteme. Bei einem kontinuierlichen Synchronlauf des Schrittmotors ist die Frequenz des Schrittaktes der Drehzahl proportional.

Mit Hilfe des Lastwinkels, der eine nach DIN 42 021 definierte und messbare Grösse ist, werden die Bewegungsvorgänge des Rotors eines Schrittmotors in einem ständerfesten Koordinatensystem beschrieben. Der Ständer, genauer der zweipolige Ständer, ist hierbei ein anderer Fachausdruck für die beiden Statorsysteme.

Nach DIN 42 021 wird zwischen einem statischen und einem dynamischen Lastwinkel unterschieden.

Der statische Lastwinkel ist definiert als der Winkel, um den sich die Welle (und damit der Rotor) des Schrittmotors gegenüber der elektromagnetischen Raststellung unter einem statisch einwirkenden Drehmoment verdreht.

Der dynamische Lastwinkel ist definiert als der Winkel, um den sich der drehende Rotor des Schrittmotors in einem bestimmten Zeitpunkt von der durch den letzten Impuls des Schrittaktes gegebenen elektromagnetischen Raststellung entfernt ist.

Schrittmotore werden heutzutage bei vielen Geräten verwendet, um Teile in bestimmte Positionen zu bringen bzw. mit vorgegebener Geschwindigkeit zu bewegen. So werden beispielsweise bei Schreib- und Druckwerken Systeme, wie der Wagen, das Typenrad, die Schreibwalze und eine Reihe anderer Einrichtungen mit Hilfe von Schrittmotoren bewegt.

Für die Ansteuerung des Schrittmotors ergeben sich nach seiner Verwendungsart verschiedene Probleme. Wenn der Rotor entgegen einem äusseren Drehmoment in seiner elektromagnetischen Rastposition gehalten werden soll, so muss der Schrittmotor mit einem Strom ausreichender Stärke versorgt werden. Wenn der Rotor und ein mitbewegtes System beschleunigt oder gleichförmig bewegt werden soll, so muss die Stärke des anliegenden Stromes und die Frequenz des Schrittaktes so gewählt werden, dass der Schrittmotor nicht aus dem Tritt fällt. Dies bedeutet, dass bei diesem Betriebszustand der dynamische Schrittlastwinkel einen bestimmten Grenzwert nicht überschreiten darf.

Es ist allgemein üblich, die Wicklungssysteme des Ständers des Schrittmotors mit einem Strom konstanter Stromstärke zu versorgen. Hierbei wird der Schrittmotor im Stillstand, während der Drehbewegung und u.U. beim Beschleunigen und beim Abbremsen mit Strömen unterschiedlicher Stromstärke versorgt, da das von der Welle des Schrittmotors abgegebene Drehmoment von den in den Wicklungssystemen fliessenden Strömen abhängig ist.

Es ist bekannt, zur Ansteuerung von Schrittmotoren, einstellbare Konstantstromquellen zu verwenden (z.B. den Baustein TEA 3717 der Fa. Thomson). Diese Konstantstromquellen besitzen einen Referenzeingang, durch den der Strom durch die angeschlossene Wicklung eines Statorsystems einstellbar ist. Die Stromregelung erfolgt hierbei analog zu einem sogenannten Zweipunktstromregler, so dass dem Konstantstrom eine hochfrequente Dreiecksspannung überlagert ist. Der hier genannte Baustein TEA 3717 enthält auch eine allgemein bekannte Tansistorbrückenschaltung, an die direkt die Wicklung des Schrittmotors angeschlossen werden kann. Die Konstantstromquelle weist einen Eingang für die Schrittmotorphase auf, über den die Stromrichtung in der angeschlossenen Wicklung einstellbar ist. Weitere Einzelheiten und die äussere Beschaltung des oben genannten Bausteins sind den zugehörigen Datenblättern entnehmbar.

Für den Schrittmotor ist, abhängig von der Stärke des jeweils anliegenden Stromes eine Impulsfolge, eine sogenannte Schrittfolge zu ermitteln, die ihn einerseits schnell beschleunigt bzw. abbremst, und die andererseits die Sicherheit bietet, dass er nicht durch Störeinflüsse, wie z.B. Schräglage, Laständerung oder Temperatureinflüsse aus dem Schritt fällt. Die Schrittfolge kann empirisch optimiert werden. Eine optimale Schrittfolge ist dadurch gekennzeichnet, dass der Schrittmotor schnell beschleunigt bzw. abgebremst wird, wobei die Betriebssicherheit gewährleistet ist. Eine Schrittfolge zur Beschleunigung des Schrittmotors besteht aus einer Impulsfolge von Schrittakten, deren Frequenz von einer sogenannten Start-Stop-Frequenz bis zu einer durch die Konstruktion des Schrittmotors und des bewegten Systems bedingten Frequenz zunimmt. Eine Schrittfolge zur Abbremsung besteht aus einer Folge von Schrittakten, deren Frequenz bis zu der Frequenz abnimmt, bei der dann der Schrittmotor sicher in einer Rastposition angehalten werden kann.

Aus der DE-A-3 138 554 ist ein Messverfahren zur Optimierung einer Schrittfolge bekannt. Diese weist eine auf der Achse des Schrittmotors angeordnete Taktscheibe auf, mit in radialer Richtung angebrachten Markierungen im Abstand des Schrittwinkels des Schrittmotors. Mit einer Lichtschranke werden diese Markierungen abgetastet, und die so erhaltenen Schrittsignale zeitgerecht, d.h. in der richtigen zeitlichen Beziehung zu den Impulsen des Schrittaktes mit diesen aufgezeichnet. Auf diese Weise kann zu jeder Impulsauslösung durch den Schrittakt der zugehörige Lastwinkel (dynamische Schrittlastwinkel) ermittelt werden. Wenn der Wert des Lastwinkels einen bestimmten Grenzwert überschreitet, fällt der Schrittmotor aus dem Tritt und bleibt stehen. Mit diesem Verfahren lässt sich empirisch eine optimale Schrittfolge ermitteln.

Aus der US-PS 4 072 888 ist ein Verfahren zur Steuerung eines Schrittmotors bekannt, bei dem nach Inbetriebsetzen des Motors durch einen Start-Motorfortschaltimpuls von der Motorstellung abhängige Rückmeldeimpulse zur Motorsteuerung verwendet werden. Hierzu enthält der Schrittmotor eine auf seiner Motorwelle festmontierte Codierscheibe, welche Impulse abgibt und die Aussagen über die jeweilige Lage des Motorrotors geben. Die von der Codierscheibe abnehmbaren Impulse werden einem Rückmeldeimpulsformer zugeführt, der an seinem Ausgang Rückmeldeimpulse abgibt. Diese werden einer Adresslogik und Phasensteuerschaltung zugeführt. Durch die Rückmeldeimpulse werden Motorfortschaltimpulse ausgelöst und nach einer bestimmten Verzögerungszeit weitergegeben, wobei diese Verzögerungszeit dem Polradwinkelwert entspricht, welcher der jeweils erreichten Geschwindigkeit, Schrittanzahl sowie dem optimalen Drehmoment zugeordnet ist.

Es ist daher Aufgabe der Erfindung, ein Verfahren zur Ansteuerung eines Schrittmotors mit permanentmagnetischer Erregung anzugeben, bei dem während der Beschleunigungsphase keine Lastwinkelpendelschwingungen auftreten.

Diese Aufgabe wird erfindungsgemäss durch die in den kennzeichnenden Teilen der Patentansprüche 1 und 8 angegebenen Merkmale gelöst.

Durch das erfindungsgemässe Verfahren ist eine automatische Anpassung an unterschiedliche Lastverhältnisse während der Drehbewegung des Schrittmotors gegeben.

Dadurch, dass die Steigung der Ausgangsspannungsgeraden einstellbar ist, ist während der Beschleunigungsphase automatisch eine optimale Schrittfolge gegeben.

Im folgenden wird das erfindungsgemässe Verfahren anhand eines in der Zeichnung dargestellten Ausführungsbeispieles erläutert. Dabei zeigen:

Fig. 1 das Blockschaltbild einer Schaltungsanordnung mit einer Auswahlstufe und einem Schrittaktgeber,

Fig. 2 ein detailliertes Schaltbild der Auswahlstufe und des Schrittaktgebers,

Fig. 3 Impulssequenzen auf einigen Steuerleitungen der Schaltungsanordnung und

Fig. 4 ein Diagramm zur Erläuterung der grundsätzlichen Wirkungsweise eines Spannungs-Frequenzwandlers.

Wie eingangs ausgeführt, bezieht sich das erfindungsgemässe Verfahren zur Ansteuerung eines Schrittmotors, insbesondere auf einen zweiphasigen bzw. zweiphasig ansteuerbaren Schrittmotor mit permanentmagnetischer Erregung. Jedes der beiden Statorsysteme trägt eine Wicklungsanordnung, die im folgenden abgekürzt mit Wicklung bezeichnet wird. Die Anzahl der Zähne bzw. die Polzahl des Stators, und damit auch des Rotors, ist für das erfindungsgemässe Verfahren von untergeorddneter Bedeutung.

Die Zeitspanne, die benötigt wird, um in der Wicklung die Richtung des Stromes umzukehren, wird im allgemeinen als Feldaufbauzeit bezeichnet. Die eingangs erwähnte Konstantstromquelle gibt zur Regelung des Stromes in der Wicklung an diese eine zerhackte Versorgungsspannung ab, deren Pulspausenverhältnis abhängig ist von der Höhe der Versorgungsspannung, vom Wert des Stromes in der Wicklung, vom Wicklungswiderstand, vom Wert der Frequenz des Schrittaktes, vom Lastwinkel des Schrittmotors, sowie von der Feldaufbauzeit.

Wenn die Versorgungsspannung, der Wert des Stromes in der Wicklung, und der Wicklungswiderstand konstant gehalten werden, sowie die Feldaufbauzeit bei der Umkehrung des Wicklungsstromes (d.h. während der Kommutierungsphase) ausgeblendet wird, dann kann erfindungsgemäss das Pulspausenverhältnis der zerhackten Versorgungsspannung zur Regelung der Frequenz des Schrittaktes, und damit zur Schrittaktregelung des Schrittmotors in Abhängigkeit vom Lastwinkel verwendet werden. Der Mittelwert des Stromes in der Wicklung weist hierbei, ausgenommen bei der Stromrichtungsumkehr, einen vorgegebenen Wert auf.

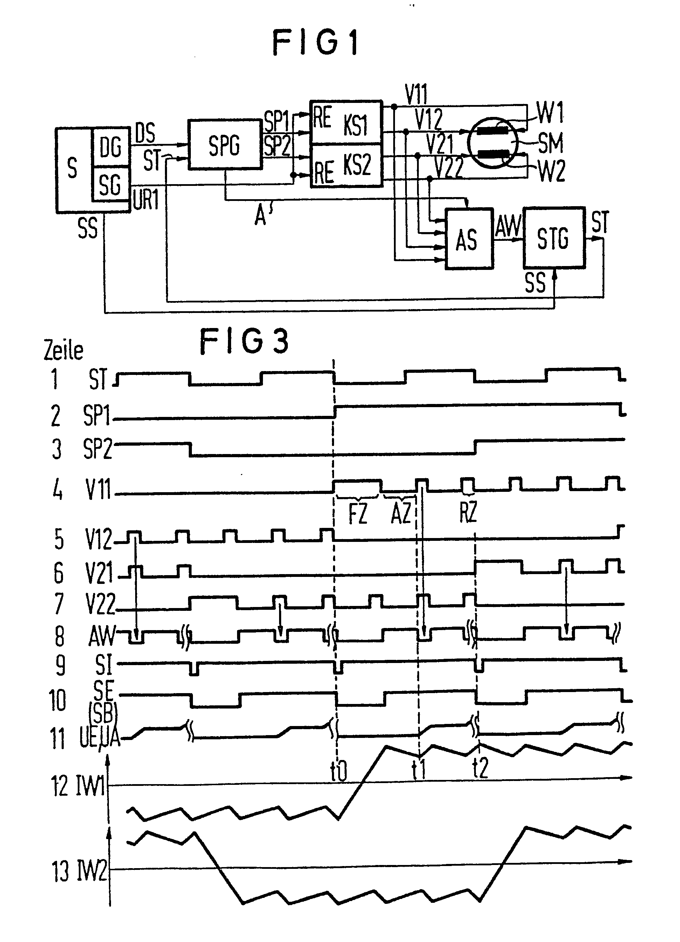

Das in Fig. 1 dargestellte Blockschaltbild enthält eine Steuerung S mit einem Drehrichtungsgeber DG und einem Sollwertgeber SG, einen Schrittmotorphasengeber SPG, zwei Konstantstromquellen KS1 und KS2, einen Schrittmotor SM mit zwei Wicklungen W1 und W2, eine Auswahlstufe AS und einen Schrittaktgeber STG.

Die beiden Konstantstromquellen KS1 und KS2, die jeweils durch den Baustein TEA 3717 der Fa. Thomson realisiert sein können, weisen einen Referenzeingang RG, über den die Stärke des Stromes, und einen nicht näher bezeichneten Eingang für die Schrittmotorphase SP1 bzw. SP2 auf, über den die Richtung des Stromes in den angeschlossenen Wicklungen W1 bzw. W2 einstellbar ist.

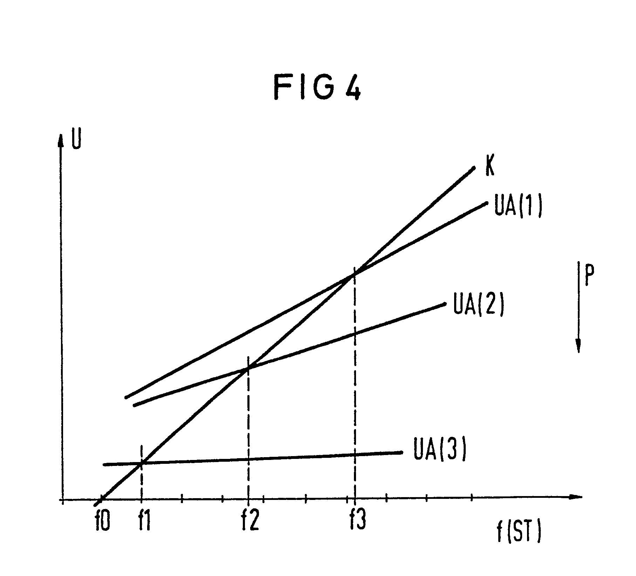

Die Konstantstromquellen geben positive Impulse zur Stromregelung ab, die aufgrund der äusseren Beschaltung (die den zugehörigen Datenblättern entnehmbar ist), durch eine konstante Auszeit AZ (siehe Fig. 3 und zugehörige Beschreibung) voneinander getrennt sind.

Der Drehrichtungsgeber DG gibt ein Drehrichtungssignal DS an den Schrittmotorphasengeber SPG, der zwei Schrittmotorphasen SP1 und SP2 an die beiden Konstantstromquellen KS1 und KS2 gibt. Der Sollwertgeber SG gibt eine Referenzspannung UR1 an den Referenzeingang RG der beiden Konstantstromquellen KS1 und KS2. Die Wicklung W1 ist über zwei Versorgungsleitungen V11 und V12 mit der Konstantstromquelle KS1 verbunden. Die Wicklung W2 ist über zwei weitere Versorgungsleitungen V21 und V22 mit der Konstantstromquelle KS2 verbunden. Die Signale auf den vier Versorgungsleitungen V11, V12, V21 und V22 werden auch an die Auswahlstufe AS gegeben, an der weiter ein Auswahlsignal A vom Schrittmotorphasengeber SPG anliegt. Von der Auswahlstufe AS wird ein Auswertesignal AW, und von der Steuerung S ein Start-Stopsignal SS an den Schrittaktgeber STG gegeben, der einen Schrittakt ST an den Schrittmotorphasengeber SPG gibt.

Zum besseren Verständnis sind gleichwirkende Eingänge und Ausgänge mit den gleichen Bezugszeichen versehen.

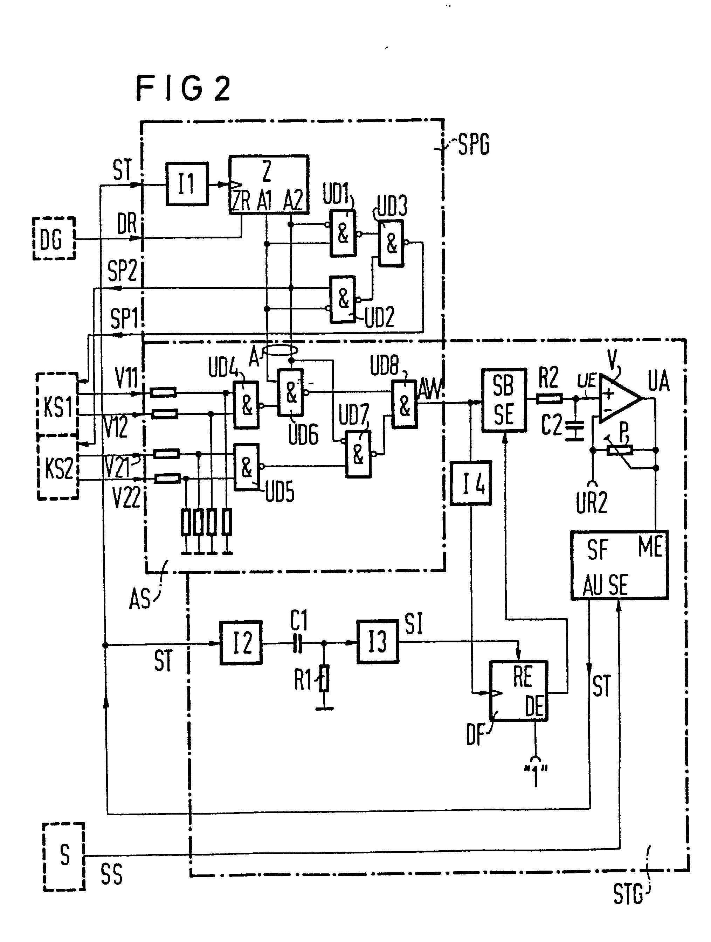

In Fig. 2 sind detailliert der Schrittmotorphasengeber SPG, die Auswahlstufe AS, und der Schrittaktgeber STG dargestellt.

Der Schrittmotorphasengeber SPG enthält einen Inverter I1, einen Zähler Z und drei invertierende UND-Verknüpfungsglieder UD1, UD2, UD3.

Die Auswahlstufe AS enthält acht nicht näher bezeichnete Widerstände, vier invertierende UND-Verknüpfungsglieder UD4, UD5, UD6, UD7 und ein UND-Verknüpfungsglied UD8.

Der Schrittaktgeber STG enthält drei Inverter I2, I3 und I4, zwei Kondensatoren C1 und C2, zwei Widerstände R1 und R2, ein sogenanntes D-Flip-Flop (Verzögerungs-Flip-Flop) DF, einen analogen Schalterbaustein SB, einen Verstärker V mit einem Potentiometer P, und einen Spannungs-Frequenzwandler SF.

Im folgenden werden der Aufbau und die Wirkungsweise einiger der in Fig. 2 dargestellten Bausteine näher erläutert.

Der Zähler Z des Schrittmotorphasengebers SPG, der im Beispiel durch den Baustein SN74 LS191 (Auf- Abzähler) der Fa. Texas Instruments realisiert ist, besitzt einen mit dem entsprechenden Symbol gekennzeichneten Takteingang (Triggerung bei positiver Flanke, Anschluss 14), hier nicht näher dargestellte Dateneingänge D1 bis D4 (Anschluss 15, 1 10, 9), Ausgänge A1 und A2 (Anschluss 3, 2, 6, 7), einen Zählrichtungseingang ZR (Anschluss 5), und einen hier nicht näher dargestellten Zählbefehlseingang (Anschluss 4). Die am Ausgang A1 abgegebene Wechselspannung besitzt eine Frequenz, deren Wert halb so gross ist wie der Wert der Frequenz der im Takteingang eingespeisten Rechteckspannung. An den Ausgängen wird eine Rechteckspannung mit einer Frequenz abgegeben, deren Wert gegenüber der am vorhergehenden Ausgang abgegebenen halbiert ist. Bei Anlegen eines der logischen Eins bzw. Null entsprechenden Potentials an den Zählrichtungseingang ZR, zählt der Zähler ab- bzw. aufwärts. Bei Anlegen eines der logischen Null entsprechenden Potentials an den Zählbefehlseingang wird gezählt.

Das D-Flip-Flop DF, das durch den Baustein 74LS74 der Fa. Texas Instruments realisiert sein kann, besitzt einen mit dem entsprechenden Symbol gekennzeichneten Takteingang (Triggerung bei positiver Flanke, Anschluss 3), einen Rücksetzeingang RE (Anschluss 1), einen Dateneingang DE (Anschluss 2), und einen nicht näher bezeichneten Ausgang (Anschluss 5).

Der analoge Schalterbaustein SB kann durch die Abtast- und Halteschaltung MC14016 der Fa. Motorola realisiert sein. Er weist einen Schalteingang SE, sowie einen nicht näher bezeichneten Eingang und Ausgang auf. Durch Anlegen eines der logischen Eins entsprechenden Potentials an den Schalteingang SE wird ein am Eingang anliegendes Signal zum Ausgang durchgeschaltet.

Der Verstärker V ist ein Komparatorverstärker, der aufgrund des variablen Rückkopplungswiderstandes (Potentiometer P) vom Ausgang zum invertierenden Eingang eine variable Verstärkung aufweist.

Der Spannungsfrequenzwandler SF, der z.B. durch den Baustein MC14046 der Fa. Motorola realisiert ist, weist einen Messeingang ME (Anschluss 9), einen Ausgang AU (Anschluss 4) und einen Schalteingang SE (Anschluss 5) auf. Die Wirkungsweise, sowie die äussere Beschaltung dieses Bausteins sind den zugeordneten Datenblättern zu entnehmen. Auf die grundsätzliche Wirkungsweise wird in der Funktionsbeschreibung eingegangen.

Die in Fig. 2 dargestellten Bausteine sind folgendermassen zusammengeschaltet.

Der vom Schrittaktgeber STG an den Schrittmotorphasengeber SPG gegebene Schrittakt ST liegt über den Inverter I1 am Takteingang des Zählers Z an. Das vom Drehrichtungsgeber DG abgegebene Drehrichtungssignal DR liegt am Zählrichtungseingang ZR des Zählers Z an. Der Ausgang A1 des Zählers Z ist mit einem Eingang des invertierenden UND-Verknüpfungsgliedes UD1 und mit einem invertierenden Eingang des invertierenden UND-Verknüpfungsgliedes UD2 verbunden. Der Ausgang A2 des Zählers Z ist mit dem anderen invertierenden Eingang des invertierenden UND-Verknüpfungsgliedes UD1 und mit dem anderen Eingang des invertierenden UND-Verknüpfungsgliedes UD2 verbunden. Die Ausgänge der invertierenden UND-Verknüpfungsglieder UD1 und UD2 sind mit den beiden Eingängen des invertierenden UND-Verknüpfungsgliedes UD3 verbunden, von dessen Ausgang die Schrittmotorphase SP1 abgegeben wird. Vom Ausgang A2 des Zählers Z wird die Schrittmotorphase SP2 abgegeben. Von den Ausgängen A1 und A2 des Zählers Z wird das Auswahlsignal A abgegeben.

Über die nicht näher bezeichneten Widerstände der Auswahlstufe AS, von denen jeweils zwei einen Spannungsteiler zur Pegelanpassung bilden, liegen die Versorgungsleitungen V11, V12, V21 und V22 in dieser Reihenfolge an den Eingängen der beiden invertierenden UND-Verknüpfungsglieder UD4 und UD5 an. Der Ausgang des invertierenden UND-Verknüpfungsgliedes UD4 ist mit dem Eingang des invertierenden UND-Verknüpfungsgliedes UD6 verbunden. Der Ausgang des invertierenden UND-Verknüpfungsgliedes UD5 ist mit einem Eingang des invertierenden UND-Verknüpfungsgliedes UD7 verbunden. Am anderen Eingang des invertierenden UND-Verknüpfungsgliedes UD6 liegt der Ausgang A1 des Zählers Z, und am anderen invertierenden Eingang des invertierenden UND-Verknüpfungsgliedes UD7 liegt der Ausgang A2 des Zählers Z. Die Ausgänge der invertierenden UND-Verknüpfungsglieder UD6 und UD7 sind mit den beiden Eingängen des UND-Verknüpfungsgliedes UD8 verbunden, an dessen Ausgang das Auswertesignal AW abgegeben wird.

Aus dem vom Spannungs-Frequenzwandler SF abgegebenen Schrittakt ST wird im Schrittaktgeber STG über einen Inverter I2, über eine aus dem Kondensator C1 und dem Widerstand R1 gebildete Differenzierstufe und über den Inverter I3, ein Schrittimpulssignal SI gebildet und an den Rücksetzeingang RE des D-Flip-Flops DF gelegt. Der Dateneingang DE des D-Flip-Flops DF liegt auf einem der logischen Eins entsprechenden Potential. Das von der Auswahlstufe AS abgegebene Auswertesignal AW wird über einen Inverter I4 an den mit dem entsprechenden Symbol gekennzeichneten Zähleingang des D-Flip-Flops DF, und an den Eingang des Schalterbausteins SB gelegt. Der Ausgang des D-Flip-Flops DF ist mit dem Schalteingang SE des Schalterbausteins SB verbunden. Der Ausgang des Schalterbausteins SB gibt über ein aus dem Widerstand R2 und dem Kondensator C2 gebildetes Integrierglied eine Eingangsspannungsgerade UE an den nichtinvertierenden Eingang des Verstärkers V. Der Ausgang des Verstärkers V, von dem eine Ausgangsspannungsgerade UA abgegeben wird, ist über ein Potentiometer P auf dessen invertierenden Eingang rückgekoppelt, an dem eine Referenzspannung UR2 anliegt. Die Ausgangsspannungsgerade UA liegt am Messeingang ME des Spannungsfrequenzwandlers SF an. Vom Ausgang AU desselben wird der Schrittakt ST abgegeben. Am Schalteingang SE des Spannungsfrequenzwandlers SF liegt das von der Steuerung S abgegebene Start-Stop-Signal SS an.

In Fig. 3 sind Impulssequenzen auf einigen Steuerleitungen bzw. Signalzustände an einigen Baustufen der Schaltungsanordnung dargestellt. Dies sind im einzelnen in Zeile 1 der vom Schrittaktgeber STG abgegebene Schrittakt ST, in den Zeilen 2 und 3 die vom Schrittmotorphasengeber SPG abgegebenen Schrittmotorphasen SP1 und SP2, in den Zeilen 4 bis 7 die von den Konstantstromquellen KS1 und KS2 abgegebenen Signale auf den Versorgungsleitungen V11, V12, V21, und V22, in Zeile 8 das von der Auswahlstufe AS abgegebene Auswertesignal AW, in Zeile 9 das im Schrittaktgeber STG gebildete Schrittimpulssignal SI, in Zeile 10 das am Schalteingang SE des Schalterbausteins SB anliegende Signal, in Zeile 11 die am Verstärker V anliegende Eingangssignalspannungsgerade UE, bzw. die von ihm abgegebene Ausgangsspannungsgerade UA (diese beiden Signale unterscheiden sich nur um einen einstellbaren Verstärkungsfaktor), und in den Zeilen 12 und 13 die in den Wicklungen W1 und W2 des Schrittmotors SM auftretenden Motorströme IW1 und IW2.

Der Schrittakt ST (Zeile 1) ist eine periodische Rechteckspannung.

Die Schrittmotorphasen SP1 und SP2 (Zeile 2 und 3) sind periodische Rechteckspannungen, die gegeneinander um 90° phasenversetzt sind. Hierbei ist der Wert der Frequenz des Schrittaktes ST viermal so gross wie der Wert der Frequenz der Schrittmotorphase SP1 bzw. SP2.

Auf den Versorgungsleitungen V11, V12, V21 und V22 (Zeilen 4 bis 7) ist hier beispielsweise jeweils eine Folge von sechs positiven Impulsen dargestellt. Der führende Impuls besitzt eine Impulsbreite, die der Feldaufbauzeit FZ entspricht. Die fünf nachfolgenden Impulse besitzen eine Impulsbreite, die jeweils einer Regelzeit RZ entsprechen. Die Impulse sind jeweils durch eine Auszeit AZ voneinander getrennt. Die Impulsfolgen auf den Versorgungsleitungen V11 und V12, sowie auf den Versorgungsleitungen V21 und V22 sind jeweils gegeneinander um 180° phasenversetzt. Die Impulsfolgen auf den Versorgungsleitungen V11 und V21 bzw. V12 und V22 sind jeweils gegeneinander um 90° phasenversetzt.

Das Auswertesignal AW (Zeile 8) besteht aus einer Impulsfolge von negativen Impulsen. Das von der Auswahlstufe AS abgegebene Auswertesignal AW entsteht dadurch, dass jeweils während der Dauer eines Rechteckimpulses des Schrittaktes, beginnend mit dessen abfallender Flanke, nacheinander die Signale auf den Versorgungsleitungen V12 (Zeile 5), V22 (Zeile 7), V11 (Zeile 4) und V21 (Zeile 6), invertiert durchgeschaltet werden.

Das Schrittimpulssignal SI (Zeile 9) besteht aus einer Folge von kurzen negativen Impulsen, deren Impulsbreite T(R1,C1) durch das Differenzierglied R1,C1 im Schritttaktgeber STG bestimmt ist.

Das am Schalteingang SE des Schalterbausteins SB (Zeile 10) anliegende Signal besteht aus einer Folge von negativen Impulsen.

Der Verlauf der Eingangs- bzw. Ausgangsspannungsgeraden UE, UA (Zeile 11) wird später in der Funktionsbeschreibung erläutert.

Die Motorströme IW1 und IW2 (Zeilen 12 und 13) bestehen aus trapezförmigen Impulsen mit wechselnder Polarität. Diesen Impulsen ist ein hochfrequenter Dreieckstrom überlagert. Der hochfrequente Dreieckstrom, und auch der Polaritätswechsel der Motorströme IW1 und IW2 werden in an sich bekannter Weise durch die Impulse auf den Versorgungsleitungen V11 bis V22 verursacht. Die Motorströme IW1 und IW2 sind gegeneinander um 90° phasenversetzt. Die Trapezform der Motorströme IW1 und IW2, sowie deren Überlagerung sind zur Verdeutlichung übertrieben dargestellt.

Fig. 4 zeigt ein Diagramm zur Erläuterung der grundsätzlichen Wirkungsweise des Spannungsfrequenzwandlers SF. Hierbei ist als Abszisse die Frequenz f des am Ausgang AU abgegebenen Schritttaktes ST und als Ordinate der Spannungsverlauf U der am Messeingang ME anliegenden Ausgangsspannungsgeraden UA dargestellt. Eine sogenannte Konversionsgerade K schneidet die Abszisse bei einer Frequenz f0. Die Steigung der Konversionsgeraden K und der Schnittpunkt mit der Abszisse sind durch die äussere Beschaltung des Spannungsfrequenzwandlers SF einstellbar. Die Konversionsgerade K wird von drei Ausgangsspannungsgeraden UA(1), UA(2), und UA(3) geschnitten. Durch die Schnittpunkte der Ausgangsspannungsgeraden UA(1) bis UA(3) mit der Konversionsgeraden K sind auf der Abszisse Frequenzen f1, f2 und f3 festgelegt. Vom Spannungsfrequenzwandler SF wird bei Anlegen einer der Ausgangsspannungsgeraden UA(1) bis UA(3) an den Messeingang ME, ein Schritttakt ST mit einer der Frequenzen f1 bis f3 vom Ausgang AU abgegeben.

Die Ausgangsspannungsgerade UA(1) schneidet die Konversionsgerade bei der höchsten, und die Ausgangsspannungsgerade UA(3) bei der niedrigsten Frequenz f. Diese Abnahme der Frequenz f ist durch einen Pfeil P gekennzeichnet, und entspricht einer Zunahme des Lastwinkels.

Durch das von der Steuerung S abgegebene Start-Stop-Signal SS kann der Schrittmotor SM über den Schritttaktgeber STG in Drehbewegung versetzt und angehalten werden. Durch Anlegen eines entsprechenden Potentials an den Schalteingang SE des Spannungsfrequenzwandlers SF gibt dieser einen Schritttakt ST mit der Frequenz f0 aus. Diese Frequenz f0 ist durch die externe Beschaltung des Spannungsfrequenzwandles SF bestimmbar, und entspricht dem Schnittpunkt der Konversionsgeraden K mit der Abszisse in Fig. 4. Der während der Drehbewegung des Schrittmotors SM vom Schritttaktgeber STG abgegebene Schritttakt ST weist eine Frequenz f auf, die durch das Pulspausenverhältnis der auf den Versorgungsleitungen V11 bis V22 (Fig. 3, Zeilen 4 bis 7) liegenden Impulse bestimmt ist. Das heisst, die Frequenz f ist durch das Verhältnis aus der Regelzeit RZ und der Auszeit AZ bestimmt.

Im folgenden wird die Funktionsweise der in Fig. 2 dargestellten Schaltungsanordnung unter Bezugnahme auf Fig. 3 und 4 beschrieben.

Der Schrittmotorphasengeber SPG bildet aufgrund des vom Schritttaktgeber STG abgegebenen Schritttaktes ST und des vom Drehrichtungsgeber DG abgegebenen Drehrichtungssignals DR die beiden Schrittmotorphasen SP1 und SP2 und das Auswahlsignal A. Das Drehrichtungssignal DR bestimmt hierbei, ob die Schrittmotorphase SP2 gegenüber der Schrittmotorphase SP1 um 90° nach links oder nach rechts phasenversetzt ist. Die Wirkungsweise der einzelnen Bausteine des Schrittmotorphasengebers SPG lässt sich aus der Beschreibung zu Fig. 2 entnehmen.

Im folgenden wird ein Messzyklus beschrieben, der zu einem Zeitpunkt t0 (Fig. 3) beginnt.

Der Schritttaktgeber STG bildet aus der abfallenden Flanke des Schritttaktes ST zum Zeitpunkt t0 über die Inverter I2 und I3 und das zwischengeschaltete Differenzierglied C1,R1 das Schrittimpulssignal SI. Das Schrittimpulssignal SI weist ab dem Zeitpunkt t0 einen negativen Impuls mit einer durch das Differenzierglied R1,C1 bestimmten Zeitkonstante auf. Da das Schrittimpulssignal SI am Rücksetzeingang RE des D-Flip-Flop anliegt, wird von dessen Ausgang ab dem Zeitpunkt t0 ein der logischen Null entsprechendes Potential an den Schalteingang SE des Schalterbausteins SB gegeben, und damit eine Signalabgabe an seinem Ausgang verhindert. Zu einem Zeitpunkt t1 weist das Auswertesignal AW (Fig. 3, Zeile 8) eine negative Flanke auf (auf der Versorgungsleitung V11, Fig. 3, Zeile 4, beginnt zum Zeitpunkt t1 ein Impuls mit einer der Regelzeit RZ entsprechenden Impulsbreite), so dass über den Inverter I4 das D-Flip-Flop DF getriggert wird. Ab dem Zeitpunkt t1 legt das D-Flip-Flop DF also ein der logischen Eins entsprechendes Potential an den Schalteingang SE des Schalterbausteins SB. Dies bedeutet einerseits, dass die Impulse auf den Versorgungsleitungen V11 bis V22 mit einer der Feldaufbauzeit FZ entsprechenden Impulsbreite im Auswertesignal AW ausgeblendet werden, und andererseits, dass ab dem Zeitpunkt t1 das Auswertesignal AW zum Integrierglied R2,C2 durchgeschaltet wird.

Das Integierglied R2, C2 bildet ab dem Zeitpunkt t1 bis zu einem Zeitpunkt t2 aus den Impulsen im Auswertesignal AW, die eine der Regelzeit RZ entsprechende Impulsbreite aufweisen (in Fig. 3 ist dies im wesentlichen jeweils nur ein Impuls), die Eingangsspannungsgerade UE. Im Verstärker V wird die Eingangsspannungsgerade UE verstärkt, und als Ausgangsspannungsgerade UA auf den Messeingang ME des Spannungs-Frequenzwandlers SF gegeben. Die Verstärkung, und damit die Steigung der Ausgangsspannungsgeraden UA (Fig. 4), ist hierbei über das Potentiometer P einstellbar.

Der Zeitpunkt t2 ist ebenso wie der Zeitpunkt t0 durch die abfallenden Flanken zweier aufeinanderfolgender negativer Impulse des Schrittimpulssignals SI bestimmt. Somit beginnt zum Zeitpunkt t2 der nächste Messzyklus.

Durch die Steigung der Ausgangsspannungsgeraden UA ist (in Kombination mit der Konversionsgeraden K) die Arbeitsfrequenz des Schrittmotors SM einstellbar. Ebenso kann durch die äussere Beschaltung des Spannungs-Frequenzwandlers SF die Steigung der Konversionsgeraden K geändert werden.

Im folgenden wird eine andere Ausführungsform der Erfindung beschrieben.

Wenn die Versorgungsspannung und der Wicklungswiderstand konstant gehalten werden, sowie die Feldaufbauzeit FZ während der Kommutierungsphase ausgeblendet werden, dann kann erfindungsgemäss die Stromänderung zur Regelung der Frequenz f des Schrittaktes ST in Abhängigkeit vom Lastwinkel verwendet werden.

Zur Anpassung der im Ausführungsbeispiel hier beschriebenen Schaltungsanordnung, sind in die Versorgungsleitungen V11 bis V22 Widerstände einzufügen. An diesen Wiederständen ist eine, der Stromänderung proportional sich ändernde Spannung abgreifbar. Diese Wechselspannung wird, analog zur Wirkungsweise des Schrittaktgebers STG, zur Bestimmung der Frequenz f des Schrittaktes ST verwendet.

Das erfindungsgemässe Verfahren ist nicht auf die Verwendung in der beschriebenen Schaltungsanordnung beschränkt. Bei entsprechender Anpassung des Schrittmotorphasengebers SPG, sowie der Auswahlstufe AS ist das Verfahren auch für mehrphasige Schrittmotoren anwendbar.

*Bezugszeichenliste*

| | |
|---|---|
| S | Steuerung |
| STG | Schrittaktgeber |
| DG | Drehrichtungsgeber |
| ST | Schrittakt |
| DS | Drehrichtungssignal |
| SPG | Schrittmotorphasengeber |
| SP1,SP2 | Schrittmotorphasen |
| KS1,KS2 | Konstantstromquellen |
| RG | Referenzeingang |
| V11,V12,V21,V22 | Versorgungsleitungen |
| SM | Schrittmotor |
| W1,W2 | Wicklungen (Wicklungssysteme) |
| AS | Auswahlstufe |
| SI | Schrittimpulssignal |
| AW | Auswertesignal |
| SB | Schalterbaustein |
| SS | Start-Stop-Signal |
| R1,R2 | Widerstände |
| C1,C2 | Kondensatoren |
| UE | Eingangsspannungsgerade |
| UA,UA(1)-UA(3) | Ausgangsspannungsgerade |
| UR1,UR2 | Referenzspannungen |
| Z | Zähler |
| ZR | Zählrichtungseingang |
| ZE | Zählbefehlseingang |
| V | Verstärker |
| A1,A2,AU | Ausgänge |
| DE | Dateneingang |
| P | Potentiometer |
| SE | Schalteingang |
| I1-I4 | Inverter |
| DF | D-Flip-Flop |
| RE | Rücksetzeingang |
| SF | Spannungs-Frequenzwandler |
| UD1-UD7 | invertierende UND-Verknüpfungsglieder |
| UD8 | UND-Verknüpfungsglied |
| ME | Messeingang |
| K | Konversionsgerade |
| P | Pfeil |
| FZ | Feldaufbauzeit |
| RZ | Regelzeit |
| AZ | Auszeit |
| t0,t1 | Zeitpunkte |
| IW1,IW2 | Motorströme |
| U | Spannungsverlauf |
| f,f0,f1,f2,f3 | Frequenz |

**Patentansprüche**

1. Verfahren zur Schrittaktregelung eines Schrittmotors (SM), der mit einem hochfrequent schaltgeregelten Motorstrom (IW1, IW2) über Versorgungsleitungen (V11 bis V22) angesteuert wird und bei dem ein Schrittakt (ST) abhängig vom Lastwinkel eingestellt wird, dadurch gekennzeichnet, dass durch das Pulspausenverhältnis von Impulsen auf den Versorgungsleitungen (V11 bis V22) die Frequenz (f) eines Schrittaktes (ST) abhängig vom Lastwinkel einstellbar ist, dass die Impulse während der Kommutierungsphase der Motorströme (IW1, IW2) ausgeblendet werden und dabei die Motorströme (IW1, IW2), die Versorgungsspannung des Schrittmotors (SM) und der Wicklungswiderstand des Schrittmotors (SM) konstant gehalten werden.

2. Verfahren nach Anspruch 1, dadurch gekennzeichnet, dass aus den Impulsen durch Integration eines Ausgangsspannungsgerade (UA) gebildet wird und dass mit der Ausgangsspannungsgeraden (UA) die Frequenz (f) bestimmt wird.

3. Verfahren nach Anspruch 2, dadurch gekennzeichnet, dass die Steigung der Ausgangsspannungsgeraden (UA) einstellbar ist.

4. Schaltungsanordnung zur Durchführung des Verfahrens nach Anspruch 1, gekennzeichnet durch eine Auswahlstufe (AS), die nacheinander die Impulse als Auswertesignal (AW) abgibt, derart, dass die zugehörigen Kommutierungsphasen der Motorströme (IW1, IW2) ausgeblendet werden, und durch einen Schrittaktgeber (STG), der aus dem Auswertesignal (AW) durch Integration eine Ausgangsspannungsgerade (UA) bildet, durch die die Frequenz (f) des Schrittaktes (ST) einstellbar ist.

5. Schaltungsanordnung nach Anspruch 4, dadurch gekennzeichnet, dass der Schrittaktgeber (STG) einen Verstärker (V) aufweist, mit dem die Steigung der Ausgangsspannungsgeraden (UA) einstellbar ist.

6. Schaltungsanordnung nach Anspruch 4 oder 5, dadurch gekennzeichnet, dass der Schrittaktgeber (STG) einen Spannungsfrequenzwandler (SF) aufweist, der entsprechend der Steigung der Ausgangsspannungsgeraden (UA) den Schrittakt (ST) abgibt.

7. Schaltungsanordnung nach Anspruch 6, dadurch gekennzeichnet, dass der Spannungsfrequenzwandler (SF) über ein Start-Stop-Signal (SS) schaltbar ist.

8. Verfahren zur Schrittaktregelung eines Schrittmotors (SM), der mit einem hochfrequent schaltgeregelten Motorstrom (IW1, IW2) über Versorgungsleitungen (V11 bis V22) angesteuert wird, und bei dem ein Schrittakt (ST) abhängig vom Lastwinkel eingestellt wird, dadurch gekennzeichnet, dass durch den zeitlichen Verlauf der hochfrequent schaltgeregelten Motorströme (IW1, IW2) in den Versorgungsleitungen (V11 bis V22) die Frequenz (f) des Schrittaktes (ST) abhängig vom Lastwinkel einstellbar ist, dass der zeitliche Verlauf der Motorströme (IW1, IW2) während deren Kommutierungsphasen ausgeblendet wird und dass die Motorströme (IW1, IW2), die Versorgungsspannung des Schrittmotors (SM) und auch der Wicklungswiderstand des Schrittmotors (SM) konstant gehalten werden.

9. Verfahren nach Anspruch 8, dadurch gekennzeichnet, dass aus dem zeitlichen Verlauf der Motorströme (IW1, IW2) Spannungen gebildet werden, dass aus den Spannungen durch Integration eine Spannungsgerade gebildet wird und dass mit der Spannungsgeraden die Frequenz (f) bestimmt wird.

**Claims**

1. A method of controlling the step signal timing for a stepping motor (SM) driven via supply lines (V11 to V22) by a motor current (IW1, IW2) that is switch-controlled at high frequencies and a step pulse-train (ST) is set in dependence upon the load angle, characterised in that the frequency (f) of a step pulse-train (ST) is adjusted in dependence upon the load angle by the pulse-pause ratio of pulses on the supply lines (V11 to V22), that the pulses are gated out during the commutation phase of the motor currents (IW1, IW2) and the motor currents (IW1, IW2), the supply voltage of the stepping motor (SM) and the winding impedance of the stepping motor (SM) are maintained constant.

2. A method as claimed in Claim 1, characterised in that an output voltage curve (UA) is formed from the pulses by integration and that the frequency (f) is determined by the output voltage curves (UA).

3. A method as claimed in Claim 2, characterised in that the increase in the gradient of the output voltage curves (UA) is adjustable.

4. A circuit arrangement for implementing the method claimed in Claim 1, characterised by: a selector stage (AS) which consecutively emits the pulses in the form of an analysis signal (AW), in such manner that the associated commutation phases of the motor currents (IW1, IW2) are gated out; and by a step clock signal generator (STG) which forms an output voltage curve (UA) from the analysis signal (AW) by integration, where the frequency (f) of the step pulse-train (ST) can be set by said output voltage curve (UA).

5. A circuit arrangement as claimed in Claim 4, characterised in that the step clock signal generator (STG) includes an amplifier (V) by which the gradient of the output voltage curve (UA) can be adjusted.

6. A circuit arrangement as claimed in Claim 4 or 5, characterised in that the step clock signal generator (STG) includes a voltage frequency converter (SF) which emits a step pulse-train (ST) corresponding to the increase in the gradient of the output voltage curve (UA).

7. A circuit arrangement as claimed in Claim 6, characterised in that the voltage frequency converter (SF) can be switched via a start-stop signal (SS).

8. A method of controlling the step signal timing for a stepping motor (SM) driven via supply lines (V11 to V22) by a motor current (IW1, IW2) that is switch-controlled at high frequencies, and wherein a step pulse-train (ST) is adjusted in dependence upon the load angle, characterised in that the frequency (f) of the step pulse-train (ST) is adjusted in dependence upon the load angle by the transient response of the motor currents (IW1, IW2) in the supply lines (V11 to V22), which are switch-controlled at high frequencies, that the transient response of the motor currents (IW1, IW2) is gated out during their commutation phases and that the motor currents (IW1, IW2), the supply voltage of the stepping motor (SM) and the winding impedance of the stepping motor (SM) are maintained constant.

9. A method as claimed in Claim 8, characterised in that voltages are formed from the transients of the motor currents (IW1, IW2), that voltage curves are formed from these voltages by integration, and that the frequency (f) is determined by the voltage curves.

**Revendications**

1. Procédé pour régler la cadence d'avance pas-à-pas d'un moteur pas-à-pas (SM), qui est commandé par un courant (IW1, IW2) du moteur, réglé par commutation à haute fréquence, par l'intermédiaire de lignes d'alimentation (V11 à V22) et dans lequel une cadence d'avance pas-à-pas (ST) est réglée en fonction de l'angle de charge, caractérisé par le fait que la fréquence (f) d'une cadence d'avance pas-à-pas (ST) est réglable en fonction de l'angle de charge au moyen du rapport impulsion/pause d'impulsions circulant dans les lignes d'alimentation (V11 à V22), que les impulsions sont supprimées pendant la phase de commutation des courants (IW1, IW2) du moteur et que les courants (IW1, IW2) du moteur, la tension d'alimentation du moteur pas-à-pas (SM) et la résistance d'enroulement du moteur pas-à-pas (SM) sont maintenues constantes.

2. Procédé suivant la revendication 1, caractérisé par le fait qu'on forme par intégration une droite (UA) de variation de la tension de sortie à partir des impulsions et qu'on détermine la fréquence (f) au moyen de la droite (UA) de variation de la tension de sortie.

3. Procédé suivant la revendication 2, caractérisé par le fait que la pente de la droite (UA) de variation de la tension de sortie est réglable.

4. Montage pour la mise en oeuvre du procédé suivant la revendication 1, caractérisé par un étage de sélection (AS) qui délivre successivement les impulsions en tant que signal d'évaluation (AW) de telle sorte que les phases associées de commutation de courant (IW1, IW2) du moteur sont supprimées, et par un générateur (STG) de cadence d'avance pas-à-pas, qui forme par intégration, à partir du signal d'évaluation (AW), une droite (UA) de variation de la tension de sortie, au moyen de laquelle la fréquence (f) de la cadence d'avance pas-à-pas (ST) est réglable.

5. Montage suivant la revendication 4, caractérisé par le fait que le générateur de cadence d'avance pas-à-pas (STG) comporte un amplificateur (V), à l'aide duquel la pente de la droite (UA) de variation de la tension de sortie est réglable.

6. Montage suivant la revendication 4 ou 5, caractérisé par le fait que le générateur de cadence d'avance pas-à-pas (STG)) comporte un convertisseur tension-fréquence (SF), qui délivre la cadence d'avance pas-à-pas (ST) conformément à la pende de la droite (UA) de variation de la tension de sortie.

7. Montage suivant la revendication 6, caractérisé par le fait que le convertisseur tension-fréquence (SF) peut être branché par l'intermédiaire d'un signal démarrage-arrêt (SS).

8. Procédé pour réaliser le réglage de la cadence d'avance pas-à-pas d'un moteur pas-à-pas (SM), qui est commandé par un courant (IW1, IW2) du moteur, réglé par commutation à haute fréquence, par l'intermédiaire de lignes d'alimentation (V11 à V22) et dans lequel une cadence d'avance pas-à-pas (ST) est réglée en fonction de l'angle de charge, caractérisé par le fait que la fréquence (f) de la cadence d'avance pas-à-pas (ST) est réglable en fonction de l'angle de charge au moyen de la variation dans le temps des courants (IW1, IW2) du moteur, réglés par commutation à haute fréquence et circulant dans les lignes d'alimentation (V11 à V22), et que la variation dans le temps des courants (IW1, IW2) du moteur est supprimée pendant leurs phases de commutation et que les courants (IW1, IW2) du moteur, la tension d'alimentation du moteur pas-à-pas (SM) et également la résistance d'enroulement du moteur pas-à-pas (SM) sont maintenus constants.

9. Procédé suivant la revendication 8, caractérisé par le fait que l'on forme des tensions à partir de la variation dans le temps des courants (IW1, IW2) du moteur, qu'on forme par intégration, à partir des tensions, une droite de variation de la tension et qu'on détermine la fréquence (f) au moyen de la droite de variation de la tension.

# FIG 1

# FIG 3

Zeile

1  ST
2  SP1
3  SP2
4  V11
   FZ   AZ   RZ
5  V12
6  V21
7  V22
8  AW
9  SI
10 SE
   (SB)
11 UEⱮA
   t0   t1   t2
12 IW1
13 IW2

FIG 2

# FIG 4